(19) Europäisches Patentamt / European Patent Office / Office européen des brevets

(11) **EP 2 856 079 B1**

(12) **EUROPEAN PATENT SPECIFICATION**

(45) Date of publication and mention
of the grant of the patent:
**25.11.2020 Bulletin 2020/48**

(51) Int Cl.:
**G01B 13/06** (2006.01)      **B01D 15/00** (2006.01)
**B01J 20/00** (2006.01)

(21) Application number: **13740077.6**

(22) Date of filing: **29.05.2013**

(86) International application number:
**PCT/SI2013/000033**

(87) International publication number:
**WO 2013/180666 (05.12.2013 Gazette 2013/49)**

(54) **DETERMINATION OF LAYER THICKNESS**

BESTIMMUNG EINER SCHICHTDICKE

DÉTERMINATION D'ÉPAISSEUR D'UNE COUCHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2012 SI 201200175**

(43) Date of publication of application:
**08.04.2015 Bulletin 2015/15**

(73) Proprietor: **Centre of Excellence For Biosensors,
Instrumentation and Process Control (COBIK)
5250 Solkan (SI)**

(72) Inventors:
• **PODGORNIK, Ales
1296 Sentvid pri Sticni (SI)**
• **SMREKAR, Vida
1000 Ljubljana (SI)**

• **ETZEL, Mark R.
Madison, Wisconsin 53703 (US)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
• **FRANC SMREKAR ET AL: "Characterisation of
methacrylate monoliths for bacteriophage
purification", JOURNAL OF
CHROMATOGRAPHY, vol. 1218, no. 17, 31
December 2011 (2011-12-31), pages 2438-2444,
XP028188185, ISSN: 0021-9673, DOI:
10.1016/J.CHROMA.2010.12.083 [retrieved on
2010-12-25] cited in the application**

**Description**

Permeable beds are used in many applications such as catalyzers, filters or as chromatographic supports. To enable flow of liquid through a permeable bed, certain pressure has to be applied, depending of the liquid properties as well as to permeable bed properties such as pore size and open porosity defined as a void volume within a permeable bed through which the liquid can flow. Several correlations predicting pressure drop on a permeable bed caused by flow of liquid were derived. The most generally applied is Darcy equation describing pressure drop under laminar flow conditions defined as:

$$\frac{dP}{dL} = -\frac{\mu}{K} \cdot v \qquad (1)$$

where »$dP$« is differential pressure drop on permeable bed, »$dL$« is differential length of permeable bed, »$\mu$« is liquid viscosity, »$v$« is liquid linear (superficial) velocity and »$K$« is permeability of permeable bed.

In equation 1, properties of permeable bed are integrated in permeability constant »$K$« reflecting structure of solid part of permeable bed named further as substrate. When substrate (solid part of permeable bed) consists of particles, permeability constant »$K$« can be expressed in terms of bed structural parameters. This relation known also as Blake-Kozeny equation (equation 2) is based on prediction of pressure drop through a straight empty tube calculated from Hagen-Poiseuille equation (valid for laminar flow) and assumption that the flow through permeable bed can be described as a flow through parallel channels - open pores of permeable bed.

$$\Delta P = k_S \cdot v \cdot L \cdot \mu \cdot \frac{1}{d_S^2} \cdot \frac{(1-\varepsilon)^2}{\varepsilon^3} \qquad (2)$$

where »$\Delta P$« is pressure drop on permeable bed, »$L$« is permeable bed length, »$k_S$« is permeable bed structural constant, »$d_S$« is characteristic linear dimension of particles (substrate) forming permeable bed (e.g. for spherical particles this is sphere diameter) and »$\varepsilon$« is permeable bed open porosity.

With recent developments of microfluidic devices there was a substantial increase of interest about the liquid behavior inside microchannels. These are channels with a size of several micrometers to several 10 micrometers. Although it was initially not obvious whether correlations predicting pressure drop developed for macroscopic systems are valid also for microchannels, several recent experimental results confirmed their validity and some discrepancies reported in few initial reports turned out to be a consequence of measurement uncertainties and channel wall roughness (Steinke M.E., Kandlikar S.G. International Journal of Thermal Sciences 2006, 45, 1073-1083; Judy J., Maynes D., Webb B.W. International Journal of Heat and Mass Transfer, 2002, 45, 3477-3489). Based on this data one can therefore apply described correlation to predict pressure drop also on microchannels.

Based on equation 2 it can be concluded that pressure drop increases with decrease of size of particles forming permeable bed. This is due to smaller pores between the particles. One can speculate that if we chemically bind molecules on the surface of the particles forming permeable bed they have to occupy certain volume above the particle surface what should result in further decrease in pores between chemically modified particles and consequently, according equation 2, in further increase of pressure drop. Because of that it might be possible to determine thickness of the layer formed of chemically bound molecules on the surface of particles solely from pressure drop increase. This approach was recently indeed derived resulting in equation 3 and applied for determination of the length of polymer chains synthesized on the particular substrate forming permeable bed - porous methacrylate monolith (Frankovic V., Podgornik A., Krajnc N.L., Smrekar F., Krajnc P., Štrancar A., J. Chromatogr. A, 2008, 1207, 84-93):

$$d_k = d_z \cdot \sqrt{\frac{\varepsilon^2 \frac{\Delta P_z}{\Delta P_k} + 4 \cdot \sqrt{\frac{\Delta P_z}{\Delta P_k}} \cdot (1-\varepsilon) - \varepsilon \cdot \sqrt{\frac{\Delta P_z}{\Delta P_k}}}{2 \cdot (1-\varepsilon)}} \qquad (3)$$

where »$k$« is index indicating substrate forming permeable bed with chemically bound molecules while »$z$« indicates substrate without chemically bound molecules.

Increase of pressure drop after binding of polymer chains was experimentally measured and it was confirmed that decrease of pore size can be detected. Same equation was also applied for estimation of thickness of plasmid DNA and bacteriophages adsorbed on the substrate of the same type, a porous methacrylate monolith (Lendero Krajnc N., Smrekar F., Strancar A., Podgornik A., J. Chromatogr. A 2011, 1218, 2413-2424; Smrekar F., Ciringer M., Strancar A., Podgornik A., J. Chromatogr. A 2011, 1218, 2438-2444), Developed correlation (equation 3) has limited use however due to several constraints such as assumption that the pores should be straight cylindrical channels, what is not the case for most of existing permeable beds as well as high sensitivity toward permeable bed open porosity and substrate particle size of the permeable bed, which should therefore both be precisely determined.

Open porosity of permeable bed can easily be determined by measurement of resident time of the tracer passing through the permeable bed or by measuring weight of the permeable bed filled with liquids having different density. More challenging is determination of particle size. Even if particles are uniformly shaped (e.g. spheres) with a defined size, there is always present certain size distribution. Furthermore, correlation assumes complete uniformity of permeable bed what can also be questioned. Finally, assumed particular microscopic structure of the permeable bed (e.g. formed of uniform spheres) is probably the biggest limitation, especially since it defines correlation itself, and consequently form of equation 3, being different for different microscopic structures and consequently giving different results. While for permeable beds, where the substrate consists of spherical particles, one can argue that application of equation 3 properly describes physical reality, the situation is substantially different for monolithic permeable beds where the substrate is porous monolith. In the case of porous monoliths the permeable bed is formed by substrate consisting of a single piece of porous skeleton, which structure can be fiber-like, coral-like or even more complex, therefore assumptions on which base equation 3 was derived cannot be physically justified. In fact, it was demonstrated that for permeable beds consisting of monolithic substrates, pressure drop correlations developed for permeable beds consisting of particulate substrate cannot be applied since there is no physical meaning of particle diameter (Tallarek U., Leinweber F.C., Seidel-Morgenstern A., Chem. Eng. Technol. 2002, 25, 1177-1181). Because of that it can be concluded that any correlation assuming certain permeable bed structure inherently has only limited use. Key question therefore is whether it is possible to derive correlation without detailed knowledge of permeable bed structure.

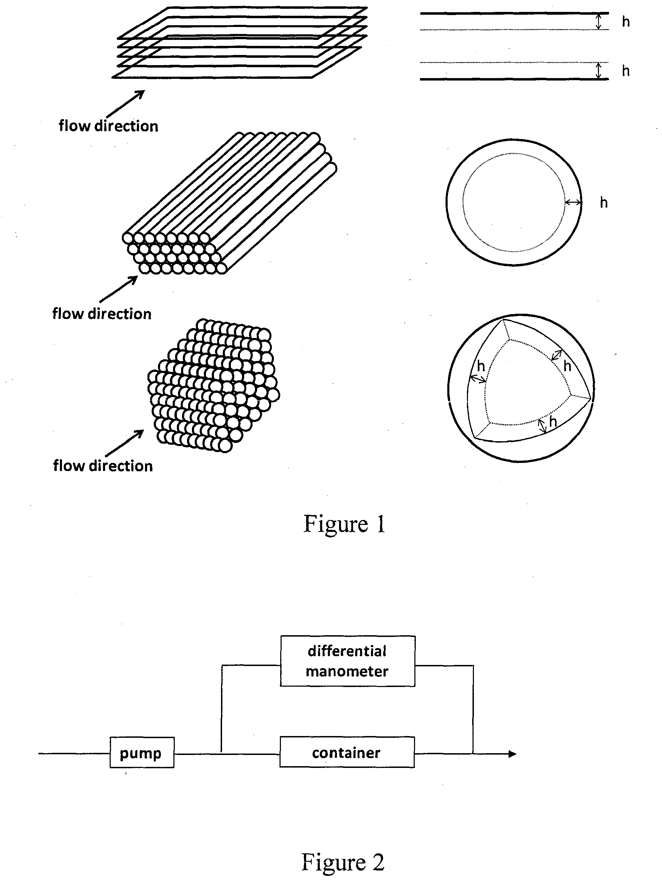

To achieve this goal a description of a permeable bed has to be as general as possible. Universal feature of every permeable bed is that it consists of a substrate representing solid part of permeable bed and of a void part what is space between solid parts of permeable bed. If permeable bed has uniform structure it can be assumed that it consists of any repetitive geometric units of solids and voids (e.g. spheres, cubes, icosahedrons, tetrahedrons or other more complex structures). These units can be small in comparison to the size of the permeable bed, named microunits in further text. If they are small in comparison to the permeable bed in all three dimensions the volume of the solid repetitive microunit is proportional to its characteristics linear dimension on the power 3. This observation is important since it indicates that in this case matter can adsorb on the surface of solid microunits uniformly therefore volume of solid microunits also increases in all three dimensions. Typical example is particulate substrate. On the other hand, structure of the permeable bed can also be different, changing its volume due to adsorbed matter by square of characteristic linear dimension. Example of such structure is permeable bed consisting of rods or tubes with a length comparable to permeable bed dimension but other more complex structures are possible too. In such a case the increase of the solid microunit volume can be described by the change of the solid microunit characteristic linear dimension on power of 2 multiplied by a constant value (e.g. length of the permeable bed). Even further, permeable bed structure can be such that volume of solid microunits changes only in one characteristic linear dimension as matter adsorbs. Examples of such structure are permeable beds consisting of parallel sheets having comparable size to the permeable bed cross-section. Change of solid microunit volume is described by the change of characteristic linear dimension on power of 1 multiplied by the cross-section of permeable bed. Examples of different permeable bed structures are shown in Figure 1.

In general, equation for volume of substrate forming permeable bed can be described as:

$$ j \cdot G_S \cdot d_S^n = V \cdot (1 - \varepsilon) \qquad (4) $$

where »j« is number of solid repetitive microunits in the permeable bed, »n« is isotropic constant representing degree of bed isotropy (number of space dimensions for which solid microunit characteristic linear dimension is small in comparison to a permeable bed dimension), »$G_S$« is constant representing geometric shape of the solid microunit (eg. »$G_S$« is 1 for cube and $\pi/6$ for sphere, in both cases »n« is close to 3; »$G_S$« is $\pi L/4$ for rod while »n« is close to 2; »$G_S$« is $L^2$ for sheet while »n« is close to 1) and V is volume of permeable bed.

If we assume that the total volume of the permeable bed does not change during matter adsorption on the substrate, what is exactly true for rigid materials, and we further assume that the change of solid microunit characteristic linear dimension after adsorption of matter is small in comparison to the characteristic linear dimension of solid microunit itself, meaning that the geometric shape of the microunits as well as their number are preserved, we can describe both, substrate volume before and substrate volume after matter adsorption using equation 4, and by dividing both correlations we obtain:

$$\left(\frac{d_{Sk}}{d_{Sz}}\right)^n = \frac{1-\varepsilon_k}{1-\varepsilon_z} \qquad (5)$$

where »k« indicates permeable bed with adsorbed matter on substrate while »z« indicates permeable bed without adsorbed matter.

Since we can always select such experimental conditions that there is a developed laminar flow through the permeable bed what can be verified with the calculation of dimensionless number Re (Reynold's number) and as it was demonstrated that equation 2 is valid also for microchannels, this equation can be used for calculation of pressure drop on the permeable bed having micrometer voids between solid microunits. If on the same permeable bed matter of defined size (further referred as a standard matter) is adsorbed on a substrate causing known increase of the solid microunit characteristic linear dimension (further in the text referred as a layer thickness) equation 2 can be used for pressure drop calculation. Dividing both equations and expressing open porosity of the permeable bed with adsorbed matter using equation 5, after rearrangement, the following expression is obtained (detailed derivation is given in Appendix 1):

$$\frac{\Delta P_z}{\Delta P_k} = \left(\frac{d_{Sk}}{d_{Sz}}\right)^{n+2} \cdot \left(\frac{1-\left(\frac{d_{Sk}}{d_{Sz}}\right)^n \cdot (1-\varepsilon_z)}{\left(\frac{d_{Sk}}{d_{Sz}}\right)^n \cdot \varepsilon_z}\right)^3 \qquad (6)$$

It can be seen that equation 6 enables estimation of the thickness of layer formed by adsorbed matter on the substrate (thickness is half of difference between »$d_{Sk}$« and »$d_{Sz}$«) but it contains two previously discussed parameters, namely solid microunit characteristic linear dimension and open porosity, and, in addition, also isotropic constant »$n$«. Although we didn't take during derivation of equation 6 any specific assumptions about permeable bed structure, we still have to precisely determine permeable bed open porosity and characteristic linear dimension of the solid microunit. Furthermore, it is not obvious how can value of isotropic constant »$n$«, reflecting permeable bed structure, be determined. It seems that it is not possible to derive, by implementing conventional approaches, correlation which would enable to estimate thickness of adsorbed matter on a substrate forming permeable bed without information of the permeable bed structure.

However, there is another possible description of the permeable bed, previously not described in the literature. Instead of description of the permeable bed structure by solid microunits, the same bed can be described by voids between the solid microunits. This approach is the opposite of traditional thinking. It has a basis in reality however where the pores are formed by an immiscible pore forming substance that is dissolved away after formation of the solid microunits that forms the permeable bed. Despite the counterintuitive aspect of having voids between solid microunits, we can derive a correlation between pressure drop and structure of permeable bed using however characteristic linear dimension of the void microunit as a parameter (void microunits are voids formed between the solid microunits). Here it has to be mentioned that characteristic linear dimension of void microunit is analogous to pore size of permeable bed, term more frequently used in the literature. For such description, pressure drop on the permeable bed cannot be any longer described by Blake-Kozeny equation but we have to derive different equation as described in details in Appendix 2. Pressure drop can be described as:

$$\Delta P = k_V * v * L * \mu * \frac{1}{d_V^2} * \frac{1}{\varepsilon} \qquad (7)$$

where »$k_V$« is permeable bed structural constant (normally having different value from $k_S$«) and »$d_V$« is characteristic linear dimension of void microunit (in contrast to »$d_S$«, which is characteristic linear dimension of solid microunit).

Using the same rational as for description of permeable bed by solid microunits one can also be described the same permeable bed by void microunits and the following equation is derived (analogue to equation 4):

$$m \cdot G_V \cdot d_V^n = V \cdot \varepsilon \qquad (8)$$

where »m« is number of repeating void microunits in permeable bed and »$G_V$« is constant reflecting void microunit geometry.

Using similar assumption of constant permeable bed volume during adsorption of matter on a substrate as well as preservation of void microstructure resulting in constant »m« and »$G_V$«, equation analogue to equation 5 can be derived:

$$\left(\frac{d_{Vk}}{d_{Vz}}\right)^n = \frac{\varepsilon_k}{\varepsilon_z} \tag{9}$$

Again, assuming the same mobile phase properties, flow rate as well as that the structure of the permeable bed is preserved during matter adsorption on the substrate (layer thickness of adsorbed matter is small in comparison to characteristic linear dimension of void microunits) we can derive the following equation (analogue to equation 6):

$$\frac{\Delta P_z}{\Delta P_k} = \left(\frac{d_{Vk}}{d_{Vz}}\right)^{n+2} = \left(1 - \frac{2h}{d_{Vz}}\right)^{n+2} \tag{10}$$

where $d_{Vk} = d_{Vz} - 2h$ and »h« is thickness of layer formed by matter adsorbed on solid microunits (forming substrate) of permeable bed.

We can see that equation 10 doesn't contain permeable bed open porosity. It can further be rewritten in a logarithmic form as:

$$ln\left(\frac{\Delta P_z}{\Delta P_k}\right) = (n+2) * ln\left(1 - \frac{2h}{d_{Vz}}\right) \tag{11}$$

Let us now assume that we have a standard matter, or calibration reference material, preferably spherical and rigid, therefore preserving its shape during adsorption on a substrate and because of that forming a layer of a known thickness $h_R$. Equation 11 can be written as:

$$ln\left(\frac{\Delta P_z}{\Delta P_{kR}}\right) = (n+2) * ln\left(1 - \frac{2h_R}{d_{Vz}}\right) \tag{12}$$

where »$h_R$« indicates known thickness of layer formed by adsorbed standard matter.

Equation 11 for sample forming an unknown thickness »$h_S$«, when adsorbed on a substrate forming permeable bed and said substrate having same structure as substrate on which standard matted was adsorbed (substrate of the same structure is also referred in further text as authentic substrate), can be written as:

$$ln\left(\frac{\Delta P_z}{\Delta P_{kS}}\right) = (n+2) * ln\left(1 - \frac{2h_S}{d_{Vz}}\right) \tag{13}$$

By dividing equations 12 and 13 we obtain:

$$\frac{ln\left(\frac{\Delta P_z}{\Delta P_{kR}}\right)}{ln\left(\frac{\Delta P_z}{\Delta P_{kS}}\right)} = \frac{ln\left(1 - \frac{2h_R}{d_{Vz}}\right)}{ln\left(1 - \frac{2h_S}{d_{Vz}}\right)} \tag{14}$$

As we can see, equation 14 does not contain isotropic constant »n«, therefore there is no need to know any information about the structure of the permeable bed to determine accurately thickness of layer formed by adsorbed matter on a substrate. However, we should still experimentally determine characteristic linear dimension $d_{Vz}$ of the void microunit. It seems that also in this case, because we do not know $d_{Vz}$, we cannot determine thickness of layer »$h$« formed by adsorbed matter solely on the basis of pressure drop measurement even if we apply standard matter forming thickness of a known size $h_R$ as a reference.

By trial and error approach we realized that by increasing value of characteristic linear dimension of void microunit $d_{Vz}$, the left side of expression in equation 14 seems to converge toward asymptotic value as described in Appendix 3. If we try to increase characteristic linear dimension of void microunit $d_{Vz}$ toward infinity the value of expression

$$\frac{ln\left(\frac{\Delta P_z}{\Delta P_{kR}}\right)}{ln\left(\frac{\Delta P_z}{\Delta P_{kS}}\right)}$$

can be calculated using L'Hopital's rule:

$$\lim_{d_{Vz}\to\infty}\frac{ln\left(1-\frac{zh_R}{d_{Vz}}\right)}{ln\left(1-\frac{zh_S}{d_{Vz}}\right)}=\frac{h_R}{h_S} \qquad (15)$$

Surprisingly, the asymptotic value is independent on the characteristic linear dimension of the void microunit and it is equal to the ratio of layer thickness formed by adsorbed standard matter and adsorbed sample matter, for which the thickness is to be defined. For real measurements this conclusion is not very useful since we cannot use permeable bed with infinite characteristic linear dimension of void microunit (pore size) as changes in pressure drop due to matter adsorption would be negligible. Therefore, we should test if this surprising mathematical conclusion has any practical value. This can be verified by estimating error we make when real value for finite characteristic linear dimension of void microunit calculated according equation 14 is substituted for a limit value at infinite value of characteristic linear dimension of void microunit. This can be done by calculating differences of right sides of equations 14 and 15 as described in details in Appendix 4.

Interestingly enough, by proper selection of permeable bed and standard matter, a calculation error estimated in Appendix 4 can be very small, frequently below 1 %. At this point we have to emphasize that there is no need to determine accurately characteristic linear dimension of void microunit (pore size) but only its approximate range, as seen from table in Appendix 4. By proper combination we can accurately determine thickness of a layer formed by adsorbed matter in a range of nanometer scale and up to several 100 nanometers, however there is no upper limit, therefore the method can be used for determination of thicker layers such as layers of adsorbed cells. For every layer thickness an appropriate experimental conditions under which calculation error is small can be selected if a limit value (equation 15) is used instead of exact solution of equation 14. Because of that, equation 14 can be rewritten, using limit value, into:

$$h_S=\frac{h_R}{\frac{ln\left(\frac{\Delta P_z}{\Delta P_{kR}}\right)}{ln\left(\frac{\Delta P_z}{\Delta P_{kS}}\right)}}=\frac{h_R*ln\left(\frac{\Delta P_z}{\Delta P_{kS}}\right)}{ln\left(\frac{\Delta P_z}{\Delta P_{kR}}\right)} \qquad (16)$$

Another parameter which could limit implementation of proposed method under conditions of low experimental error would be necessity to measure extremely high or low pressure drop differences between unloaded permeable bed without adsorbed matter and permeable bed with adsorbed matter. Limiting would be also very high pressure drop on unloaded permeable bed itself what might affect accuracy of the pressure drop measurements but also cause deformation of sensible matter such as biologic macromolecules or living cells.

Because of that we calculated expected pressure drop for permeable bed having characteristic linear dimension of void microunit (pores) of different size and layers of different thicknesses formed by adsorbed matter. Calculated values are shown in Appendix 5. Based on calculated values it can be concluded that experimental conditions can always be selected in a way that both, pressure drop on unloaded permeable bed and difference in pressure drop between unloaded permeable bed and authentic permeable bed with adsorbed matter fall into the range of several tenth of bar up to several 10 bar, what enable usage of conventional commercially available manometers.

The invention consists of a method according to claim 1, an apparatus according to claim 10, and uses according to claims 12-15.

Based on described findings it can be concluded that by using standard matter forming a layer of a known thickness, thickness of a layer formed by adsorption of an unknown sample matter can be accurately determined without any information about the permeable bed structure, its open porosity or details about its characteristic linear dimension of void microunit (pore size). Different thicknesses can be measured simply by selection of permeable bed having characteristic linear dimensions of void microunit (pores) in a range which can be easily prepared (Merhar M., Podgornik A., Barut M., Zigon M., Strancar A., J. Sep. Sci. 2003, 26, 322-330; Barut M., Podgornik A., Merhar M., Strancar A., In: Svec F., Tennikova T.B. and Deyl Z. (eds) Monolithic materials: preparation, properties, and applications, Elsevier, Amsterdam, 2003, p. 51-76). Since the method enables determination of the layer thickness in the range of nanometers or even less, the adsorbed matter can consists of ions or small molecules, biologic molecules like peptides, proteins, polynucleotides and others, but also of viruses, virus like particles, cells of microorganisms, plant or animal culture cells, stem cells and others. Understandably, matter can also consists of artificial nanoparticles and other particles, but also of agglomerates consisting of same molecules and/or particles or combination of different ones. These are just few non-limiting examples, since we can actually measure layer thickness of any matter which adsorbs on a substrate forming permeable bed. Adsorption can be reversible, as it is the case for most adsorption-desorption processes, or it can be practically irreversible as it is the case when chemical covalent bond is formed between adsorbed matter and the substrate. Number of different combinations is nearly unlimited since the substrate forming permeable bed can be modified in a way to introduce different chemical moieties (by any chemical or physical means) on the surface of solid microunits the substrate consists of, changing in this way surface properties, for example its hydrophilicity or hydrophobicity, ionic character and capability to form hydrogen or van der Walls interactions. By covalent binding of specific molecules, commonly named ligands, highly specific affinity interactions can be induced, e.g. between specific biologic molecules. These are just few examples which do not however limit other possibilities. Besides, changing surface properties of the substrate forming permeable bed, also properties of mobile phase can be changed, affecting in this way interaction of matter with a permeable bed. Whether certain matter interacts under specific conditions with substrate forming permeable bed can be verified by pumping it through the permeable bed and measuring if it is retained. Technique of choice for this purpose is chromatography. In this way, we can determine in advance appropriate permeable bed and properties of mobile phase containing matter, under which said matter adsorption occurs. Such conditions can further be used for determination of layer thickness. By changing properties of the mobile phase we can also study how these changes affect layer thickness.

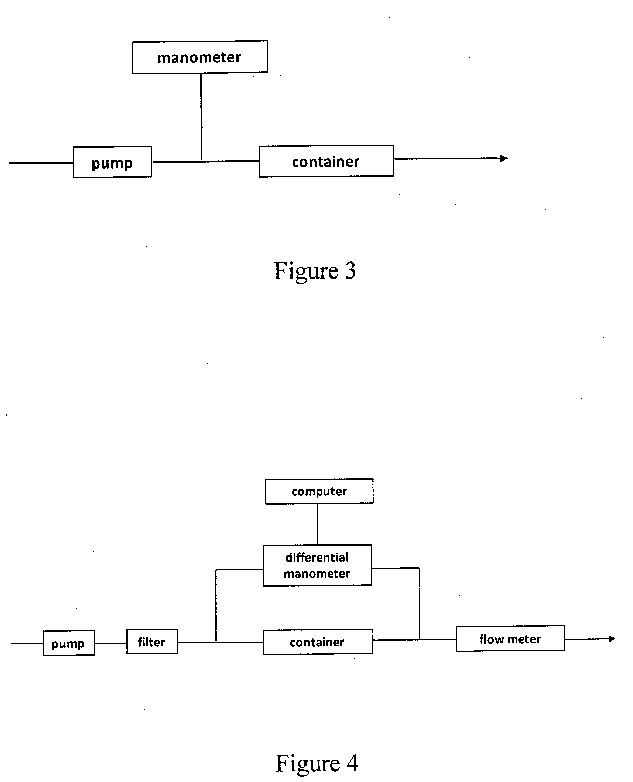

To implement described method we construct an apparatus, which enables determination layer thickness. The apparatus consists of permeable bed fixed in appropriate container in a way to direct liquid through permeable bed, said container equipped with an inlet and an outlet to allow mobile phase to pass through the container exhibiting low pressure drop and through permeable bed, a system which induces movement of the liquid, preferably a pump, and a pressure measuring device. Pressure measuring device can be differential manometer measuring pressure difference between the inlet and the outlet of container containing permeable bed (Figure 2) or it can manometer measuring pressure at the container inlet in case pressure of the container outlet is constant (Figure 3). Arrows in Figures 2 and 3 indicate flow direction. The system may further include flow measuring device since the flow rate during the measurement of the pressure drop on unloaded permeable bed and permeable bed with adsorbed matter has to be known and preferably the same (pressure drop is depended on the flow rate according equation 1). Flow rate during measurement is preferably constant what facilitates interpretation of the results. In addition, a filter can be added in front of a container that prevents large molecules, particles and/or agglomerates to enter the container and affect pressure drop on the permeable bed, due to potential partial blocking, and consequently affecting accuracy of layer thickness estimation. However, filter pores has to be large enough to allow unrestricted passage of the matter to be adsorbed on the substrate forming permeable bed. The apparatus can further be upgraded with a computer connected to its parts and equipped with appropriate software (Figure 4) to perform data acquisition of pressure difference data, flow rate data, flow rate regulation, data storage, data analysis but of course its performance is not limited to described functions.

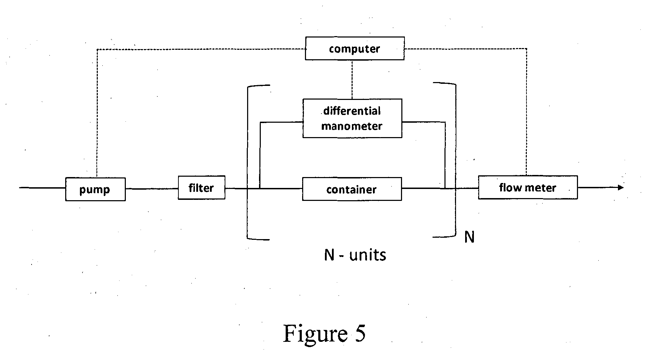

The apparatus can be constructed also in a way to accommodate several containers consecutively connected, each container containing permeable bed and differential manometer between inlet and outlet (Figure 5). Permeable beds have preferably same structure (authentic substrates), but different surface properties affecting interaction of matter with the substrate forming permeable bed. In Figure 5 a number of containers is marked with »N« (N can be any natural number). If matter does not adsorb on particular substrate forming permeable bed, pressure drop measured on said permeable bed can be used to determine if flow through said permeable bed induces permeable bed compression what has to be taken into account for layer thickness estimation. On the other hand, such configuration also enables simultaneous determination of layer thickness of various matters present in the sample. Determination is performed in a way that particular matter selectively adsorbs only on a substrate of particular permeable bed, bearing appropriate surface functionality. Based on measurement of pressure drop on permeable bed and by implementing equation 16, the apparatus enables determination of various parameters, such as, but not limited to:

- Determination of the thickness of layer formed by adsorbed matter in the range from 1 nm up to 10 micrometers and more
- Determination of permeability of the layer formed by adsorbed matter when its layer thickness is known
- Determination of penetration degree of investigated matter into the grafted layer
- Determination of adsorption kinetics by using thin permeable bed
- Monitoring changes in layer thickness caused by changes of liquid composition, pH value, temperature and other physical parameters
- Determination of adsorption orientation of asymmetric molecules or particles on a substrate forming permeable bed
- Effect of the liquid composition on adsorption (e.g. hydrophobic, ion-exchange, affinity conditions)
- Study of interactions
- Determination of multilayer adsorption
- Monitoring of agglomeration
- Effect of sample preparation on its size (e.g. swelling of cellulose in the presence of salt)

EXAMPLE 1

As a substrate to form permeable bed we used commercially available methacrylate monolith having disk shape and volume of 0.34 ml (CIM DEAE disk monolith, BIA Separations d.o.o., Slovenia), open porosity of 0.6 and pore size 1400 nm, bearing weak anion exchange diethylaminoethyl (DEAE) groups, being positively charged at around neutral pH. Monolith was inserted in appropriate container (CIM housing, BIA Separations d.o.o., Slovenia). At inlet and outlet of the container a differential manometer was connected (Validyne, USA) to measure pressure difference on permeable bed and said container was connected via capillary to the pump. For pumping a high pressure chromatographic pump was used (Knauer, Germany) which provides constant flow-rate even if pressure drop on permeable bed is changing. Mobile phase was 20 mM Tris-HCl buffer having pH value of 7.4 (mobile phase A) providing constant charge on substrate (porous monolith) forming permeable bed and by that reproducible adsorption of matter. System is shown in Figure 2. Flow rate was monitored by measuring volume of mobile phase at container outlet per time unit.

To determine pressure drop on empty container, above described system was used but there was no substrate (porous monolith) placed in the container. Flow rate was 4 ml/min and pressure difference was determined to be 0.3 bar. This pressure difference was subtracted from values of pressure drop measured on container containing monolithic substrate. After measurement was completed, monolithic substrate was inserted in the container and pressure drop was measured again. At the flow rate of 4 ml/min pressure drop was measured to be 2.7 bar, therefore pressure drop on the permeable bed was 2.4 bar.

As standard matter protein bovine serum albumin (BSA) with molecular mass of 66 kDa and hydrodynamic diameter of 7.2 nm was used. Protein was dissolved in mobile phase A to the concentration of 1 mg/ml. At mobile phase A pH value 7.4 BSA protein is negatively charged therefore it adsorbs on positively charged monolithic substrate. Protein solution was filtered through filter having 0.22 micrometer pores to remove potential agglomerates, pumped through the monolithic substrate forming permeable bed while constantly monitoring increase of pressure drop due to protein adsorption. When pressure drop was stabilized we assumed that the monolithic substrate is saturated with BSA protein. After that, mobile phase containing BSA was substituted by a mobile phase A, which was pumped through the permeable bed at a constant flow rate of 4 ml/min. This mobile phase does not cause protein desorption therefore pressure drop on the permeable bed should reflect increase of pressure drop due to decrease of pore size and open porosity. Measured pressure drop was 3.05 bar and by subtraction of pressure drop of empty container, pressure drop on permeable bed of 2.75 bar was obtained. After measurement was completed mobile phase containing 20 mM Tris-HCl buffer and 1.5 M NaCl (mobile phase B) was pumped through the permeable bed causing BSA protein desorption. When pressure drop on container was stabilized, mobile phase B was exchanged with mobile phase A to condition DEAE groups present on a monolithic substrate and to check if entire BSA protein was desorbed - pressure drop should be equal as before BSA loading.

To determine thickness of layer formed by adsorbed matter with the goal to verify if proposed method provides correct values, we adsorbed on the same monolithic substrate using described procedure, another protein, thyroglobulin, having molecular mass of 660 kDa, hydrodynamic diameter of 20 nm and isoelectric point of 5, therefore being also negatively charged at pH value 7.4 of the mobile phase A. As second sample spherical latex particles of declared size 24 nm and surface covered with COOH groups providing them also with negative charge at pH value 7.4 were used. At the mobile phase flow-rate 4ml/min, pressure drop on permeable bed with adsorbed thyroglobulin was determined to be 3.5 bar while for adsorbed latex particle was 3.8 bar.

To calculate thickness of adsorbed layer equation 16 was used with assumption that adsorbed BSA forms layer with the thickness of 7.2 nm. Based on this assumption, using pressure drop of unloaded permeable bed and pressure drop on the authentic (same in this case) permeable bed with adsorbed thyroglobulin layer thickness was calculated to be equal to 22 nm while for adsorbed latex particles layer thickness was calculated to be 25 nm. Both values are in good agreement with a literature data.

EXAMPLE 2

System described under example 1 was used. As standard matter latex particles of a diameter 60 nm were used, again covered with COOH groups therefore being negatively charged around neutral pH value, while as two samples latex particles of 24 nm and 103 nm size were used.

Same procedure as under Example 1 was used. At mobile phase flow-rate of 4ml/min pressure drop on unloaded permeable bed was same as under Example 1 while pressure drop on a permeable bed loaded with 60 nm latex particles was determined to be 7.5 bar. When authentic (the same in this case) permeable bed was loaded with 24 nm latex particles measured pressure drop was 3.8 bar and when authentic (the same in this case) permeable bed was loaded with latex particles of 103 nm size, measured pressure was 17.8 bar. Based on equation 16 and assumption that latex particles of 60 nm diameter used as a standard matter when adsorbed form layer having thickness of 60 nm, we were able to estimate thickness of layer formed by adsorbed 24 nm latex particles to be 23 nm while for layer thickness of 103 nm latex particles this value was calculated to be 103 nm.

APPENDIX 1

Pressure drop on a permeable bed can be described with Blake-Kozeny correlation (Equation 2 in main text):

$$\Delta P = k_S \cdot v \cdot L \cdot \mu \cdot \frac{1}{d_S^2} \cdot \frac{(1-\varepsilon)^2}{\varepsilon^3}$$

Let's mark in equation 2 variables describing permeable bed containing adsorbed matter with index "k" while for unloaded permeable bed (without adsorbed matter) index "z" is used. Equation 2 can be written as:

$$\Delta P_k = k_{Sk} \cdot v \cdot L \cdot \mu \cdot \frac{1}{d_{Sk}^2} \cdot \frac{(1-\varepsilon_k)^2}{\varepsilon_k^3} \qquad\qquad (P1.1)$$

$$\Delta P_z = k_{Sz} \cdot v \cdot L \cdot \mu \cdot \frac{1}{d_{Sz}^2} \cdot \frac{(1-\varepsilon_z)^2}{\varepsilon_z^3} \qquad\qquad (P1.2)$$

In case the thickness of adsorbed matter is small in comparison to the characteristic linear dimension of solid microunit the structure of the permeable bed does not change therefore »$k_{Sk}$« and »$k_{Sz}$« are the same. If pressure drop is measured with the same liquid and flow rate, equations P1.1 and P1.2 can be divided and after rearrangement we get:

$$\frac{\Delta P_z}{\Delta P_k} = \left(\frac{d_{Sk}}{d_{Sz}}\right)^2 \cdot \left(\frac{1-\varepsilon_z}{1-\varepsilon_k}\right)^2 \cdot \left(\frac{\varepsilon_k}{\varepsilon_z}\right)^3 \qquad\qquad (P1.3)$$

In main text equation 4 was derived:

$$\left(\frac{d_{Sk}}{d_{Sz}}\right)^n = \frac{1-\varepsilon_k}{1-\varepsilon_z}$$

When we express »$\varepsilon_k$« in equation 4 explicitly and substitute it in equation P1.3, after rearrangement the following expression is derived:

$$\frac{\Delta P_z}{\Delta P_k} = \left(\frac{d_{Sk}}{d_{Sz}}\right)^{n+2} \cdot \left(\frac{1-\left(\frac{d_{Sk}}{d_{Sz}}\right)^n \cdot (1-\varepsilon_z)}{\left(\frac{d_{Sk}}{d_{Sz}}\right)^n \cdot \varepsilon_z}\right)^3 \qquad (P1.4)$$

APPENDIX 2

General equation for pressure drop on a permeable bed when fluid passes through it is written as (Bird B.B., Stewart W.E., Lightfoot E.N., Transport phenomena, John Wiley&Sons, New York, 1960, p. 196-200):

$$\Delta P = 2v\mu L \left(\frac{a_w^2}{\varepsilon^3}\right) \qquad (P2.1)$$

where »$a_w$« is wetted surface of permeable bed divided by permeable bed volume
»$a_w$« can be written in two different but equivalent ways:

1. by the permeable bed solid part

$$a_w = \frac{wetted\ surface}{total\ volume} = \frac{solid\ volume}{total\ volume} \cdot \frac{wetted\ surface}{solid\ volume} = (1-\varepsilon) \cdot \frac{wetted\ surface}{solid\ volume}$$

2. by the permeable bed void part

$$a_w = \frac{wetted\ surface}{total\ volume} = \frac{pore\ volume}{total\ volume} \cdot \frac{wetted\ surface}{pore\ volume} = \varepsilon \cdot \frac{wetted\ surface}{pore\ volume}$$

Since both descriptions are equivalent the same structure can be described in both ways. Wetted surface is proportional to the square of characteristic linear dimension of the solid microunit but also to the square of characteristic linear dimension of the void microunit. Furthermore volume of the solid part (substrate) is proportional to the power of three of characteristic linear dimension of the solid microunit and also volume of the void part is proportional to the power of three of characteristic linear dimension of the void microunit. Because of that »$a_w$« can be described in two different ways:

1. description by solid permeable bed part

$$a_w = (1-\varepsilon) \cdot \frac{wetted\ surface}{solid\ volume} = (1-\varepsilon) \cdot k_z \cdot \frac{1}{d_s} \qquad (P2.2)$$

2. description by void permeable bed part

$$a_w = \varepsilon \cdot \frac{wetted\ surface}{pore\ volume} = \varepsilon \cdot k_v \cdot \frac{1}{d_v} \qquad (P2.3)$$

Equation P2.1 can therefore be written in two different ways depending whether pressure drop on permeable bed is described by its solid part or by its void part.

1. equation P2.1 describing pressure drop by solid part of permeable bed

$$\Delta P = 2v\mu L\left(\frac{a_w^2}{\varepsilon^5}\right) = 2v\mu L\left(\frac{\left(\left(1-\varepsilon\right)\cdot k_s\frac{\varepsilon}{d_s}\right)^2}{\varepsilon^5}\right) = 2v\mu L\cdot k_s^2\cdot\frac{1}{d_s^2}\cdot\frac{(1-\varepsilon)^2}{\varepsilon^5} \qquad (P2.4)$$

2. equation P2.1 describing pressure drop by void part of permeable bed

$$\Delta P = 2v\mu L\left(\frac{a_w^2}{\varepsilon^5}\right) = 2v\mu L\left(\frac{\left(\varepsilon\cdot k_v\frac{\varepsilon}{d_v}\right)^2}{\varepsilon^5}\right) = 2v\mu L\cdot k_v^2\cdot\frac{1}{d_v^2}\cdot\frac{1}{\varepsilon} \qquad (P2.5)$$

We can see that equation P2.4 is identical to Blake-Kozeny equation (equation 2 in main text), while equation P2.5 describing the same permeable bed by its void part, is novel. Equations P2.4 and P2.5 are similar, but differ in term »$\varepsilon$«.

APPENDIX 3

Estimation how does value of equation 14 changes with increase of permeable bed characteristic linear dimension of void microunit (pore diameter ($d_{Vz}$)) for three different values of adsorbed standard matter ($h_R$) and adsorbed sample matter ($h_S$).

| $h_R$ (nm): | 5 | $h_R$ (nm): | 80 | $h_R$ (nm): | 150 |
|---|---|---|---|---|---|
| $h_S$ (nm): | 15 | $h_S$ (nm): | 200 | $h_S$ (nm): | 130 |
| $d_{Vz.}$ (nm) | | $d_{Vz}$ (nm) | | $d_{Vz}$ (nm) | |
| 40 | 0.207519 | 420 | 0.15752 | 420 | 1.298091 |
| 60 | 0.263034 | 440 | 0.188492 | 440 | 1.28117 |
| 80 | 0.284107 | 460 | 0.209852 | 460 | 1.267909 |
| 100 | 0.295396 | 480 | 0.226294 | 480 | 1.257218 |
| 120 | 0.302457 | 500 | 0.239626 | 500 | 1.248405 |
| 140 | 0.307295 | 520 | 0.250778 | 520 | 1.241008 |
| 160 | 0.31082 | 540 | 0.260309 | 540 | 1.234707 |
| 180 | 0.313503 | 560 | 0.268584 | 560 | 1.229272 |
| 200 | 0.315614 | 580 | 0.275858 | 580 | 1.224533 |
| 220 | 0.317319 | 600 | 0.282315 | 600 | 1.220364 |
| 240 | 0.318724 | 620 | 0.288095 | 620 | 1.216666 |
| 260 | 0.319902 | 640 | 0.293305 | 640 | 1.213363 |
| 280 | 0.320904 | 660 | 0.298029 | 660 | 1.210395 |
| 300 | 0.321767 | 680 | 0.302336 | 680 | 1.207712 |
| 320 | 0.322518 | 700 | 0.306281 | 700 | 1.205275 |
| 340 | 0.323177 | 720 | 0.309909 | 720 | 1.203051 |
| 360 | 0.323761 | 740 | 0.313258 | 740 | 1.201013 |
| 380 | 0.324281 | 760 | 0.31636 | 760 | 1.199139 |
| 400 | 0.324747 | 780 | 0.319242 | 780 | 1.19741 |
| 420 | 0.325168 | 800 | 0.321928 | 800 | 1.195808 |
| 440 | 0.32555 | 820 | 0.324437 | 820 | 1.194322 |
| 460 | 0.325897 | 840 | 0.326787 | 840 | 1.192937 |
| 480 | 0.326215 | 860 | 0.328992 | 860 | 1.191645 |

(continued)

| $h_R$ (nm): | 5 | $h_R$ (nm): | 80 | $h_R$ (nm): | 150 |
|---|---|---|---|---|---|
| $h_S$ (nm): | 15 | $h_S$ (nm): | 200 | $h_s$ (nm): | 130 |
| $d_{Vz}$ (nm) | | $d_{Vz}$ (nm) | | $d_{Vz}$ (nm) | |
| 500 | 0.326506 | 880 | 0.331066 | 880 | 1.190437 |
| 520 | 0.326775 | 900 | 0.33302 | 900 | 1.189303 |
| 540 | 0.327023 | 920 | 0.334865 | 920 | 1.188238 |
| 560 | 0.327254 | 940 | 0.336609 | 940 | 1.187236 |
| 580 | 0.327468 | 960 | 0.338261 | 960 | 1.186291 |
| 600 | 0.327667 | 980 | 0.339828 | 980 | 1.185398 |
| 620 | 0.327853 | 1000 | 0.341317 | 1000 | 1.184553 |
| 640 | 0.328028 | 1020 | 0.342733 | 1020 | 1.183752 |
| 660 | 0.328191 | 1040 | 0.344081 | 1040 | 1.182993 |

APPENDIX 4

To facilitate estimation of calculation error made by introduction of limit value instead of exact value (equations 14 and 15) two new dimensionless variables are introduced substituting existing three:

$$H = \frac{h_R}{h_S} \quad \text{and} \quad R = \frac{h_R}{d_{Vz}/2}$$

where it is obvious that $0 < R < 1$ since thickness of layer formed by adsorbed standard matter cannot be larger than half of characteristic linear dimension of void microunit, also $R < H$ since thickness of layer formed by adsorbed sample matter cannot be larger than half of characteristic linear dimension of void microunit. If standard matter is selected in a way that forms layer with thickness smaller of the layer thickness of the adsorbed sample matter (therefore $h_S > h_R$) it is also $0 < H < 1$. Error can be estimated based on the following expression:

$$error\ (\%) = 100 * \left( \frac{h_R}{h_S} - \frac{ln\left(1 - \frac{2h_R}{d_{Vz}}\right)}{ln\left(1 - \frac{2h_S}{d_{Vz}}\right)} \right) \tag{P4.1}$$

which can be rewritten by substitution with two just introduced variables R and H into:

$$error\ (\%) = 100 * \left( H - \frac{ln\,(1-R)}{ln\left(1 - \frac{R}{H}\right)} \right) \tag{P4.2}$$

From equation P4.2 the error can be estimated for particular R and H values. Results are presented in table P4.1.

Table P4.1: Calculation error (%) (calculated according equation P4.2) when changing R and H values, caused by the substitution of exact solution with a limit value. Values for R ≥ 0.3 and H ≥ 0.7 are calculated.

| H\R | 0.3 | 0.35 | 0.4 | 0.45 | 0.5 | 0.55 | 0.6 | 0.65 | 0.7 | 0.75 | 0.8 |
|---|---|---|---|---|---|---|---|---|---|---|---|
| 0.98 | 0.4 | 0.5 | 0.6 | 0.7 | 0.9 | 1.1 | 1.3 | 1.5 | 1.9 | 2.4 | 3.0 |
| 0.94 | 1.2 | 1.5 | 1.8 | 2.2 | 2.7 | 3.2 | 3.9 | 4.7 | 5.8 | 7.3 | 9.5 |
| 0.9 | 2.0 | 2.5 | 3.1 | 3.8 | 4.5 | 5.5 | 6.6 | 8.0 | 10.0 | 12.6 | 16.8 |
| 0.86 | 2.9 | 3.6 | 4.4 | 5.3 | 6.4 | 7.7 | 9.4 | 11.5 | 14.4 | 18.6 | 25.6 |
| 0.82 | 3.7 | 4.6 | 5.6 | 6.9 | 8.3 | 10.1 | 12.4 | 15.3 | 19.4 | 25.7 | 38.7 |
| 0.78 | 4.5 | 5.7 | 7.0 | 8.5 | 10.3 | 12.6 | 15.5 | 19.4 | 25.1 | 35.5 | |

(continued)

| H\R | 0.3 | 0.35 | 0.4 | 0.45 | 0.5 | 0.55 | 0.6 | 0.65 | 0.7 | 0.75 | 0.8 |
|---|---|---|---|---|---|---|---|---|---|---|---|
| 0.74 | 5.4 | 6.7 | 8.3 | 10.2 | 12.4 | 15.3 | 19.0 | 24.2 | 32.7 | | |
| 0.7 | 6.3 | 7.9 | 9.7 | 11.9 | 14.7 | 18.2 | 22.9 | 30.2 | | | |

Table P4.2: Calculation error (%) (calculated according equation P4.2) when changing R and H values, caused by the substitution of exact solution with a limit value. Values for R < 0.3 are calculated.

| H\R | 0.00 | 0.01 | 0.02 | 0.03 | 0.04 | 0.06 | 0.08 | 0.10 | 0.15 | 0.20 | 0.25 |
|---|---|---|---|---|---|---|---|---|---|---|---|
| 0.95 | 0.0 | 0.0 | 0.1 | 0.1 | 0.1 | 0.2 | 0.2 | 0.3 | 0.4 | 0.6 | 0.8 |
| 0.9 | 0.0 | 0.1 | 0.1 | 0.2 | 0.2 | 0.3 | 0.4 | 0.5 | 0.9 | 1.2 | 1.6 |
| 0.8 | 0.0 | 0.1 | 0.2 | 0.3 | 0.4 | 0.6 | 0.9 | 1.1 | 1.7 | 2.4 | 3.2 |
| 0.7 | 0.0 | 0.2 | 0.3 | 0.5 | 0.6 | 1.0 | 1.3 | 1.7 | 2.6 | 3.7 | 4.9 |
| 0.6 | 0.0 | 0.2 | 0.4 | 0.6 | 0.9 | 1.3 | 1.7 | 2.2 | 3.5 | 5.0 | 6.6 |
| 0.5 | 0.0 | 0.3 | 0.5 | 0.8 | 1.1 | 1.6 | 2.2 | 2.8 | 4.4 | 6.3 | 8.5 |
| 0.45 | 0.0 | 0.3 | 0.6 | 0.9 | 1.2 | 1.8 | 2.4 | 3.1 | 4.9 | 7.0 | 9.5 |
| 0.4 | 0.0 | 0.3 | 0.6 | 1.0 | 1.3 | 1.9 | 2.6 | 3.4 | 5.4 | 7.8 | 10.7 |
| 0.35 | 0.0 | 0.4 | 0.7 | 1.0 | 1.4 | 2.1 | 2.9 | 3.7 | 6.0 | 8.7 | 12.0 |
| 0.3 | 0.0 | 0.4 | 0.8 | 1.1 | 1.5 | 2.3 | 3.1 | 4.0 | 6.6 | 9.7 | 13.9 |
| 0.28 | 0.0 | 0.4 | 0.8 | 1.2 | 1.6 | 2.3 | 3.2 | 4.2 | 6.8 | 10.2 | 15.1 |
| 0.26 | 0.0 | 0.4 | 0.8 | 1.2 | 1.6 | 2.4 | 3.3 | 4.3 | 7.1 | 10.8 | 17.2 |
| 0.24 | 0.0 | 0.4 | 0.8 | 1.2 | 1.7 | 2.5 | 3.4 | 4.5 | 7.4 | 11.5 | |
| 0.22 | 0.0 | 0.4 | 0.8 | 1.3 | 1.7 | 2.6 | 3.6 | 4.6 | 7.8 | 12.7 | |
| 0.2 | 0.0 | 0.4 | 0.9 | 1.3 | 1.8 | 2.7 | 3.7 | 4.8 | 8.3 | | |
| 0.19 | 0.0 | 0.5 | 0.9 | 1.3 | 1.8 | 2.7 | 3.7 | 4.9 | 8.6 | | |
| 0.18 | 0.0 | 0.5 | 0.9 | 1.3 | 1.8 | 2.7 | 3.8 | 5.0 | 8.9 | | |
| 0.17 | 0.0 | 0.5 | 0.9 | 1.4 | 1.8 | 2.8 | 3.9 | 5.1 | 9.4 | | |
| 0.16 | 0.0 | 0.5 | 0.9 | 1.4 | 1.9 | 2.8 | 4.0 | 5.3 | 10.1 | | |
| 0.15 | 0.0 | 0.5 | 0.9 | 1.4 | 1.9 | 2.9 | 4.1 | 5.4 | | | |
| 0.14 | 0.0 | 0.5 | 0.9 | 1.4 | 1.9 | 2.9 | 4.2 | 5.6 | | | |
| 0.13 | 0.0 | 0.5 | 1.0 | 1.4 | 2.0 | 3.0 | 4.3 | 5.8 | | | |
| 0.12 | 0.0 | 0.5 | 1.0 | 1.5 | 2.0 | 3.1 | 4.4 | 6.1 | | | |
| 0.11 | 0.0 | 0.5 | 1.0 | 1.5 | 2.0 | 3.2 | 4.6 | 6.6 | | | |
| 0.1 | 0.0 | 0.5 | 1.0 | 1.5 | 2.1 | 3.2 | 4.8 | | | | |
| 0.09 | 0.0 | 0.5 | 1.0 | 1.5 | 2.1 | 3.4 | 5.2 | | | | |
| 0.08 | 0.0 | 0.5 | 1.0 | 1.6 | 2.2 | 3.5 | 7.8 | | | | |
| 0.07 | 0.0 | 0.5 | 1.0 | 1.6 | 2.2 | 3.8 | | | | | |
| 0.06 | 0.0 | 0.5 | 1.1 | 1.7 | 2.4 | 5.8 | | | | | |
| 0.05 | 0.0 | 0.5 | 1.1 | 1.7 | 2.6 | | | | | | |
| 0.04 | 0.0 | 0.6 | 1.1 | 1.9 | | | | | | | |
| 0.03 | 0.0 | 0.6 | 1.2 | | | | | | | | |
| 0.02 | 0.0 | 0.6 | | | | | | | | | |

APPENDIX 5

To estimate range of pressure drop for particular permeable bed and increase of pressure drop due to adsorption of matter on a substrate forming permeable bed, simulation was performed based on derived equations. Estimation is made for liquid having viscosity of 1 mPas (viscosity of water) and linear velocity of 212 cm/h (common conditions in lab), permeable bed has constant structure and porosity of 0.6 but we are changing pore size of permeable bed. It was determined experimentally that such permeable bed has characteristic linear dimension of void microunit (pore size) of 1300 nm (determined by mercury porosimetry) and exhibits permeability of $1.1 \times 10^{-14}$ m$^2$.

Table P5.1: Values for pressure drop of unloaded permeable bed (no adsorbed matter) are shown in row labeled by P, while in the table there are values of pressure drop increase based on estimated thickness of layer formed by adsorbed matter. Data are shown for values where measured pressure drop is estimated to be within the range 0.1 - 80 bar, range for which common laboratory differential manometers can be used. Unit for pressure is bar, while layer thickness (*h*) and pore diameter (*d*) are given in nanometers. Table shows characteristic linear dimension range of void microunit - pore range from 200 to 1700 nanometers and layer thickness from 0.1 to 200 nanometers.

| h\d (nm) | 200 | 250 | 300 | 350 | 400 | 450 | 500 | 700 | 900 | 1300 | 1700 |
|---|---|---|---|---|---|---|---|---|---|---|---|
| **P (bar)** | **67.9** | **43.5** | **30.2** | **22.2** | **17.0** | **13.4** | **10.9** | **5.5** | **3.4** | **1.6** | **0.9** |
| 0.1 | 0.88 | 0.45 | 0.26 | 0.16 | 0.11 | | | | | | |
| 0.2 | 1.77 | 0.90 | 0.52 | 0.33 | 0.22 | 0.15 | 0.11 | | | | |
| 0.3 | 2.67 | 1.36 | 0.79 | 0.49 | 0.33 | 0.23 | 0.17 | | | | |
| 0.4 | 3.58 | 1.82 | 1.05 | 0.66 | 0.44 | 0.31 | 0.23 | | | | |
| 0.5 | 4.51 | 2.29 | 1.32 | 0.83 | 0.55 | 0.39 | 0.28 | 0.10 | | | |
| 0.6 | 5.45 | 2.77 | 1.59 | 1.00 | 0.67 | 0.47 | 0.34 | 0.12 | | | |
| 0.7 | 6.40 | 3.25 | 1.87 | 1.17 | 0.78 | 0.55 | 0.40 | 0.14 | | | |
| 0.8 | 7.37 | 3.73 | 2.14 | 1.34 | 0.90 | 0.63 | 0.46 | 0.17 | | | |
| 0.9 | 8.35 | 4.22 | 2.42 | 1.52 | 1.01 | 0.71 | 0.51 | 0.19 | | | |
| 1 | 9.35 | 4.72 | 2.70 | 1.69 | 1.13 | 0.79 | 0.57 | 0.21 | 0.10 | | |
| 2 | | 9.99 | 5.67 | 3.52 | 2.34 | 1.63 | 1.18 | 0.42 | 0.20 | | |
| 3 | | 15.9 | 8.93 | 5.51 | 3.63 | 2.52 | 1.82 | 0.65 | 0.30 | 0.10 | |
| 4 | | 22.5 | 12.5 | 7.66 | 5.02 | 3.47 | 2.50 | 0.88 | 0.41 | 0.13 | |
| 5 | | 29.9 | 16.4 | 9.99 | 6.52 | 4.48 | 3.21 | 1.12 | 0.52 | 0.17 | |
| 6 | | | 20.8 | 12.5 | 8.12 | 5.56 | 3.97 | 1.38 | 0.63 | 0.20 | |
| 7 | | | 25.5 | 15.3 | 9.84 | 6.71 | 4.78 | 1.64 | 0.75 | 0.24 | 0.11 |
| 8 | | | 30.8 | 18.2 | 11.7 | 7.93 | 5.63 | 1.91 | 0.87 | 0.28 | 0.12 |
| 9 | | | 36.6 | 21.5 | 13.7 | 9.23 | 6.53 | 2.20 | 0.99 | 0.31 | 0.14 |
| 10 | | | 43.0 | 25.0 | 15.8 | 10.6 | 7.48 | 2.50 | 1.12 | 0.35 | 0.15 |
| 15 | | | | 47.8 | 29.2 | 19.1 | 13.2 | 4.18 | 1.83 | 0.56 | 0.24 |
| 20 | | | | | 48.6 | 30.9 | 20.8 | 6.25 | 2.66 | 0.79 | 0.34 |
| 25 | | | | | | 47.4 | 31.1 | 8.80 | 3.63 | 1.05 | 0.44 |
| 30 | | | | | | 70.7 | 45.2 | 12.0 | 4.77 | 1.34 | 0.55 |
| 35 | | | | | | | | 15.9 | 6.12 | 1.66 | 0.67 |
| 40 | | | | | | | | 20.8 | 7.72 | 2.02 | 0.80 |
| 45 | | | | | | | | 26.9 | 9.61 | 2.43 | 0.95 |
| 50 | | | | | | | | 34.5 | 11.8 | 2.88 | 1.11 |
| 60 | | | | | | | | 56.3 | 17.7 | 3.96 | 1.46 |
| 70 | | | | | | | | | 26.0 | 5.33 | 1.89 |
| 80 | | | | | | | | | 38.0 | 7.06 | 2.40 |
| 90 | | | | | | | | | 55.4 | 9.27 | 3.01 |
| 100 | | | | | | | | | | 12.1 | 3.74 |
| 110 | | | | | | | | | | 15.7 | 4.62 |
| 120 | | | | | | | | | | 20.4 | 5.68 |
| 130 | | | | | | | | | | 26.5 | 6.97 |
| 140 | | | | | | | | | | 34.5 | 8.52 |
| 150 | | | | | | | | | | 44.9 | 10.4 |
| 160 | | | | | | | | | | 58.7 | 12.7 |
| 170 | | | | | | | | | | | 15.5 |
| 180 | | | | | | | | | | | 19.0 |
| 190 | | | | | | | | | | | 23.2 |
| 200 | | | | | | | | | | | 28.4 |

Table P5.2: Values for pressure drop of unloaded permeable bed (no adsorbed matter) are shown in row labelled by P, while in the table there are values of pressure drop increase based on estimated thickness of layer formed by adsorbed matter. Data are shown for values where measured pressure drop is estimated to be within the range 0.1 - 80 bar, range for which common laboratory differential manometers can be used. Unit for pressure is bar, while layer thickness ($h$) and pore diameter ($d$) are given in nanometers. Table shows characteristic linear dimension range of void microunit - pore range from 2100 to 6100 nanometers and layer thickness from 15 to 600 nanometers.

| h\d (nm) | 2100 | 2500 | 2900 | 3300 | 3700 | 4100 | 4500 | 4900 | 5300 | 5700 | 6100 |
|---|---|---|---|---|---|---|---|---|---|---|---|
| **P (bar)** | **0.62** | **0.43** | **0.32** | **0.25** | **0.20** | **0.16** | **0.13** | **0.11** | **0.10** | **0.08** | **0.07** |
| 15 | 0.12 | | | | | | | | | | |
| 20 | 0.17 | 0.10 | | | | | | | | | |
| 25 | 0.22 | 0.13 | | | | | | | | | |
| 30 | 0.28 | 0.16 | 0.10 | | | | | | | | |
| 35 | 0.34 | 0.19 | 0.12 | | | | | | | | |
| 40 | 0.40 | 0.23 | 0.14 | | | | | | | | |
| 45 | 0.46 | 0.26 | 0.16 | 0.11 | | | | | | | |
| 50 | 0.54 | 0.30 | 0.18 | 0.12 | | | | | | | |
| 60 | 0.69 | 0.38 | 0.23 | 0.15 | 0.10 | | | | | | |
| 70 | 0.88 | 0.48 | 0.29 | 0.19 | 0.13 | | | | | | |
| 80 | 1.09 | 0.58 | 0.35 | 0.22 | 0.15 | 0.11 | | | | | |
| 90 | 1.33 | 0.70 | 0.41 | 0.26 | 0.18 | 0.13 | | | | | |
| 100 | 1.61 | 0.83 | 0.48 | 0.31 | 0.21 | 0.15 | 0.11 | | | | |
| 110 | 1.93 | 0.98 | 0.57 | 0.36 | 0.24 | 0.17 | 0.12 | | | | |
| 120 | 2.31 | 1.15 | 0.66 | 0.41 | 0.27 | 0.19 | 0.14 | 0.10 | | | |
| 130 | 2.74 | 1.34 | 0.75 | 0.47 | 0.31 | 0.21 | 0.15 | 0.11 | | | |
| 140 | 3.25 | 1.56 | 0.87 | 0.53 | 0.35 | 0.24 | 0.17 | 0.13 | 0.10 | | |
| 150 | 3.84 | 1.81 | 0.99 | 0.60 | 0.39 | 0.27 | 0.19 | 0.14 | 0.11 | | |
| 160 | 4.52 | 2.08 | 1.12 | 0.67 | 0.43 | 0.30 | 0.21 | 0.16 | 0.12 | | |
| 170 | 5.32 | 2.40 | 1.28 | 0.76 | 0.48 | 0.33 | 0.23 | 0.17 | 0.13 | 0.10 | |
| 180 | 6.26 | 2.76 | 1.45 | 0.85 | 0.54 | 0.36 | 0.26 | 0.19 | 0.14 | 0.11 | |
| 190 | 7.36 | 3.17 | 1.63 | 0.95 | 0.60 | 0.40 | 0.28 | 0.21 | 0.15 | 0.12 | |
| 200 | 8.65 | 3.64 | 1.85 | 1.06 | 0.66 | 0.44 | 0.31 | 0.22 | 0.17 | 0.13 | 0.10 |
| 250 | 19.6 | 7.18 | 3.34 | 1.80 | 1.08 | 0.70 | 0.47 | 0.34 | 0.25 | 0.19 | 0.15 |
| 300 | 45.6 | 14.3 | 6.00 | 3.02 | 1.72 | 1.07 | 0.71 | 0.49 | 0.36 | 0.26 | 0.20 |
| 350 | | 29.0 | 10.9 | 5.06 | 2.73 | 1.62 | 1.04 | 0.70 | 0.50 | 0.37 | 0.28 |
| 400 | | 60.8 | 20.0 | 8.54 | 4.32 | 2.46 | 1.52 | 1.00 | 0.69 | 0.50 | 0.37 |
| 450 | | | 37.7 | 14.6 | 6.89 | 3.72 | 2.21 | 1.42 | 0.96 | 0.67 | 0.49 |
| 500 | | | 73.0 | 25.4 | 11.1 | 5.68 | 3.24 | 2.00 | 1.32 | 0.91 | 0.65 |
| 550 | | | | 45.1 | 18.1 | 8.73 | 4.76 | 2.84 | 1.82 | 1.23 | 0.86 |
| 600 | | | | | 30.1 | 13.6 | 7.04 | 4.04 | 2.51 | 1.65 | 1.14 |

## Claims

1. A method for determination of the thickness of a layer of a matter adsorbed on a substrate present in a container having an inlet and an outlet,

   - wherein the substrate forms a bed permeable for fluids or gases and which interacts with the matter, by means of a measurement of a pressure difference between an inlet and an outlet of the container when a the fluid or gas flows through the said permeable bed or by measurement of the pressure at the container inlet when the container outlet is kept at constant pressure, wherein the thickness of the matter adsorbed on the substrate is

- proportional to the thickness of an adsorbed layer of a standard matter adsorbed on a substrate, to any type of logarithm of the pressure difference ratio on the substrate free of the layer of the absorbed matter (unloaded substrate) and the authentic substrate with the adsorbed matter, and

- inversely proportional to any type of logarithm of the ratio of the pressure difference on the unloaded substrate and an authentic substrate with a standard matter adsorbed on that substrate; wherein the thickness of the matter absorbed on the substrate is calculated using the following equation:

$$h_S = \frac{h_R}{\frac{ln\left(\frac{\Delta P_z}{\Delta P_{kR}}\right)}{ln\left(\frac{\Delta P_z}{\Delta P_{kS}}\right)}} = \frac{h_R * ln\left(\frac{\Delta P_z}{\Delta P_{kS}}\right)}{ln\left(\frac{\Delta P_z}{\Delta P_{kR}}\right)}$$

wherein hs is the thickness of the matter absorbed on the substrate, $h_R$ is the thickness of an absorbed layer of a standard matter absorbed on a substrate, $\Delta P_z$ is the pressure difference of the substrate free of the layer of absorbed matter, $\Delta P_{kS}$ is the pressure difference of the substrate with absorbed sample matter and $\Delta P_{kR}$ is the pressure difference of the substrate with absorbed standard matter.

2. Method according to claim 1, wherein the thickness of the matter adsorbed on a substrate is described by any correlation or set of data between the measured pressure difference of unloaded substrate, an authentic substrate with an adsorbed matter and an authentic substrate with a standard adsorbed matter and the thickness of an adsorbed layer having trend that results in mathematical correlation index ($R^2$) calculated between the abovementioned correlation or set of data and the values generated by correlation from claim 1, for equal pressure difference values, higher than 0.5.

3. Method according to claim 1, wherein the matter is species selected from the group consisting of an ion, an atom, a molecule, a nanoparticle, a virus, a cell, a particle or an agglomerate of the species or their combination.

4. Method according to claim 1, wherein the flow through the permeable bed is a laminar flow.

5. Method according to claim 1, wherein the pressure difference on the unloaded substrate and on the authentic substrate with adsorbed matter is caused by the liquid flow and the liquid has constant physical and chemical properties affecting the pressure difference, or wherein the pressure difference is between 0.001 bar and 10,000 bar, more preferably between 0.01 bar and 1,000 bar and even more preferably between 0.1 bar and 100 bar.

6. Method according to claim 1, wherein the void fraction of the permeable bed consists of the pores between the solid parts having size of from 10 nm up to 10 mm, preferably from 100 nm to 1mm.

7. Method according to claim 1, wherein the size of the pores between the solid parts of the substrate is selected according to expected thickness of adsorbed layer to match preferred pressure difference according to claim 5.

8. Method according to claim 1, wherein the matter of which thickness of adsorbed layer is to be determined and the standard matter interact with the same substrate.

9. Method according to claim 1, wherein the substrate is porous monolith or membrane or wherein the substrate consists of non self-supporting particles or wherein the substrate is preferably non- compressible or has low compressibility.

10. An apparatus operating according to the method of claim 1 comprising either at least one device providing flow through the said substrate, such as a pump, a substrate present in a container and a device to measure pressure difference between an inlet and an outlet of the substrate, or at least one device providing flow through the said substrate, such as a pump, a substrate present in a container and a device to measure pressure at inlet of the substrate; a filter prior to substrate present in a container; and an interface unit, computer and appropriate software for data acquisition, data analysis and regulation, the software comprising instructions which, when executed by the computer, cause the computer to carry out the thickness calculation of claim 1.

**11.** The apparatus according to claim 10 comprising an additional substrate present in a separate container and a device to measure pressure difference between inlet and outlet, both substrates present each in separate container having same structure but one substrate lacking functionalities causing interaction with the matter, or comprising a set of substrates present in the separate containers, each container comprising a device to measure pressure difference between inlet and outlet, all substrates present in separate containers having same structure but different functionalities in particular enabling simultaneous determination of layer thickness of several adsorbing matters from a complex sample.

**12.** Use of the apparatus according to claim 10 or 11 wherein one or several fluids or gases having different viscosity are pumped through a permeable bed containing no matter adsorbing to a substrate at various flow-rates providing pressure difference according to claim 5 to evaluate permeable bed compressibility or wherein a set of standard matters having accurately determined size and shape adsorbing to a substrate is used to calibrate said apparatus or wherein the flow rate through the permeable bed is stepwise changing to get multiple values of pressure difference on said permeable bed, to achieve higher measurement accuracy.

**13.** Use of the apparatus according to claim 10 or 11 for determination of the thickness of a layer of a matter adsorbed on a substrate in the range between 0.1 nanometer and 100 micrometers or
to determine an effect of the change of the physical properties of the fluid or gas flowing through the permeable bed formed of substrate with the adsorbed matter on the thickness of an adsorbed layer.

**14.** Use of the apparatus according to claim 10 or 11 that enables determination of orientation of asymmetric adsorbed matter on the substrate, or use of the apparatus according claim 10 or 11 for determination of strength of interaction of adsorbing matter with the substrate or for monitoring of displacement of adsorbed matter or its aggregates from the substrate.

**15.** Use of the apparatus according to claim 10 or 11 fusing standard adsorbing matter having accurately determined size that enables determination of flow of fluid of gas through the layer of adsorbed matter, or use of the apparatus according to claim 10 or 11 using standard adsorbing matter having accurately determined size that enables determination of degree of agglomeration of said matter, or use of the apparatus according to claim 10 or 11 using standard adsorbing matter having accurately determined size that enables to discriminate between single and multilayer adsorption of said adsorbed matter or using the apparatus according to claim 10 or 11 using standard adsorbing matter having accurately determined size that enables determination of degree of penetration of said adsorbed matter into permeable surface of substrate.

**Patentansprüche**

**1.** Verfahren zur Bestimmung der Dicke einer Schicht aus einem Stoff, der an einem Substrat adsorbiert ist, das sich in einem Behälter mit einem Einlass und einem Auslass befindet;

- wobei das Substrat ein Bett bildet, das für Flüssigkeiten oder Gase durchlässig ist und mit dem Stoff wechselwirkt, mittels einer Messung einer Druckdifferenz zwischen einem Einlass und einem Auslass des Behälters, wenn die Flüssigkeit oder das Gas durch das durchlässige Bett strömt, oder durch Messung des Drucks am Behältereinlass, wenn der Behälterauslass auf einem konstanten Druck gehalten wird, wobei die Dicke des auf dem Substrat adsorbierten Stoffes
- proportional zu der Dicke einer adsorbierten Schicht eines auf einem Substrat adsorbierten Standardstoffes, zu jeder Art von Logarithmus des Verhältnisses der Druckdifferenz auf dem Substrat, das frei von der Schicht des adsorbierten Stoffes ist (unbeladenes Substrat), und dem authentischen Substrat mit dem adsorbierten Stoff und
- umgekehrt proportional zu jeder Art von Logarithmus des Verhältnisses der Druckdifferenz auf dem unbeladenen Substrat und einem authentischen Substrat mit einem Standardstoff, der an diesem Substrat adsorbiert ist,
wobei die Dicke des auf dem Substrat adsorbierten Stoffes unter Verwendung der folgenden Gleichung berechnet wird:

$$h_S = \frac{h_R}{\frac{ln\left(\frac{\Delta P_z}{\Delta P_{kR}}\right)}{ln\left(\frac{\Delta P_z}{\Delta P_{kS}}\right)}} = \frac{h_R * ln\left(\frac{\Delta P_z}{\Delta P_{kS}}\right)}{ln\left(\frac{\Delta P_z}{\Delta P_{kR}}\right)}$$

wobei hs die Dicke des auf dem Substrat adsorbierten Stoffes ist, $h_R$ die Dicke einer adsorbierten Schicht eines auf dem Substrat adsorbierten Standardstoffes ist, ∆Pz die Druckdifferenz des von der Schicht des adsorbierten Stoffes freien Substrats ist, $\Delta P_{kS}$ die Druckdifferenz des Substrats mit adsorbiertem Probenstoff ist und $\Delta P_{kR}$ die Druckdifferenz des Substrats mit adsorbiertem Standardstoff ist.

2. Verfahren gemäß Anspruch 1, wobei die Dicke des auf einem Substrat adsorbierten Stoffes durch jede Korrelation oder jeden Datensatz zwischen der gemessenen Druckdifferenz von unbeladenem Substrat, eines authentischen Substrats mit einem adsorbierten Stoff und eines authentischen Substrats mit einem adsorbierten Standardstoff und der Dicke einer adsorbierten Schicht beschrieben wird, mit einem Trend, der zu einem mathematischen Korrelationsindex ($R^2$), der zwischen der oben genannten Korrelation oder dem Datensatz und den durch die Korrelation aus Anspruch 1 erzeugten Werten für gleiche Druckdifferenzwerte berechnet wird, von mehr als 0,5 führt.

3. Verfahren gemäß Anspruch 1, wobei es sich bei dem Stoff um eine Spezies handelt, die aus der Gruppe ausgewählt ist, die aus einem Ion, einem Atom, einem Molekül, einem Nanoteilchen, einem Virus, einer Zelle, einem Teilchen oder einem Agglomerat der Spezies oder ihrer Kombination besteht.

4. Verfahren gemäß Anspruch 1, wobei die Strömung durch das durchlässige Bett eine laminare Strömung ist.

5. Verfahren gemäß Anspruch 1, wobei die Druckdifferenz auf dem unbeladenen Substrat und auf dem authentischen Substrat mit adsorbiertem Stoff durch die Strömung der Flüssigkeit verursacht wird und die Flüssigkeit konstante physikalische und chemische Eigenschaften aufweist, die die Druckdifferenz beeinflussen, oder wobei die Druckdifferenz zwischen 0,001 bar und 10 000 bar, besonders bevorzugt zwischen 0,01 bar und 1000 bar und ganz besonders bevorzugt zwischen 0,1 bar und 100 bar liegt.

6. Verfahren gemäß Anspruch 1, wobei die Hohlraumfraktion des durchlässigen Betts aus den Poren zwischen den festen Teilen mit einer Größe von 10 nm bis zu 10 mm, vorzugsweise von 100 nm bis 1 mm, besteht.

7. Verfahren gemäß Anspruch 1, wobei die Größe der Poren zwischen den festen Teilen des Substrats gemäß der erwarteten Dicke der adsorbierten Schicht ausgewählt wird, so dass diese zu der bevorzugten Druckdifferenz gemäß Anspruch 5 passt.

8. Verfahren gemäß Anspruch 1, wobei der Stoff, von dem die Dicke der adsorbierten Schicht bestimmt werden soll, und der Standardstoff mit demselben Substrat wechselwirken.

9. Verfahren gemäß Anspruch 1, wobei es sich bei dem Substrat um einen porösen Monolith oder eine poröse Membran handelt oder wobei das Substrat aus nichtselbsttragenden Teilchen besteht oder wobei das Substrat vorzugsweise nicht komprimierbar ist oder nur eine geringe Komprimierbarkeit aufweist.

10. Vorrichtung, die nach dem Verfahren gemäß Anspruch 1 arbeitet, umfassend entweder wenigstens eine Vorrichtung, die für eine Strömung durch das Substrat sorgt, wie eine Pumpe, ein in einem Behälter vorhandenes Substrat und eine Vorrichtung zur Messung der Druckdifferenz zwischen einem Einlass und einem Auslass des Substrats; oder wenigstens eine Vorrichtung, die für eine Strömung durch das Substrat sorgt, wie eine Pumpe, ein in einem Behälter vorhandenes Substrat und eine Vorrichtung zur Messung des Drucks am Einlass des Substrats; einen Filter vor dem in einem Behälter vorhandenen Substrat; und eine Schnittstelleneinheit, einen Rechner und geeignete Software für die Datenerfassung, Datenanalyse und Regulierung, wobei die Software Anweisungen umfasst, die bei Ausführung durch den Rechner bewirken, dass der Rechner die Dickenberechnung von Anspruch 1 ausführt.

11. Vorrichtung gemäß Anspruch 10, umfassend ein zusätzliches Substrat, das sich in einem separaten Behälter befindet, und eine Einrichtung zur Messung der Druckdifferenz zwischen Einlass und Auslass, wobei beide Substrate, die sich jeweils in separaten Behältern befinden, dieselbe Struktur aufweisen, aber einem Substrat Funktionalitäten, die eine Wechselwirkung mit dem Stoff verursachen, fehlen, oder umfassend eine Gruppe von Substraten, die sich in den separaten Behältern befinden, wobei jeder Behälter eine Einrichtung zur Messung der Druckdifferenz zwischen Einlass und Auslass umfasst, alle Substrate, die sich in separaten Behältern befinden, dieselbe Struktur, aber unterschiedliche Funktionalitäten aufweisen, die insbesondere die gleichzeitige Bestimmung der Schichtdicke von mehreren adsorbierenden Stoffen aus einer komplexen Probe ermöglichen.

12. Verwendung der Vorrichtung gemäß Anspruch 10 oder 11, wobei eine oder mehrere Flüssigkeiten oder Gase mit unterschiedlicher Viskosität und mit verschiedenen Strömungsgeschwindigkeiten durch ein durchlässiges Bett, das keinen an ein Substrat adsorbierten Stoff enthält, gepumpt werden, was für eine Druckdifferenz gemäß Anspruch 5 sorgt, um die Kompressibilität des durchlässigen Betts zu bewerten; oder
wobei eine Gruppe von Standardstoffen mit genau bestimmter Größe und Form, die an ein Substrat adsorbiert sind, verwendet werden, um die Vorrichtung zu eichen, oder wobei sich die Strömungsgeschwindigkeit durch das durchlässige Bett stufenweise verändert, um mehrere Werte der Druckdifferenz an dem durchlässigen Bett zu erhalten und dadurch eine höhere Messgenauigkeit zu erreichen.

13. Verwendung der Vorrichtung gemäß Anspruch 10 oder 11 zur Bestimmung der Dicke einer Schicht aus einem Stoff, der an einem Substrat adsorbiert ist, im Bereich zwischen 0,1 Nanometer und 100 Mikrometer; oder
zur Bestimmung einer Wirkung der Veränderung der physikalischen Eigenschaften der Flüssigkeit oder des Gases, die oder das durch das durchlässige Bett strömt, das aus einem Substrat mit dem adsorbierten Stoff gebildet ist, auf die Dicke einer adsorbierten Schicht.

14. Verwendung der Vorrichtung gemäß Anspruch 10 oder 11, die die Bestimmung der Orientierung eines asymmetrischen adsorbierten Stoffes auf dem Substrat ermöglicht, oder
Verwendung der Vorrichtung gemäß Anspruch 10 oder 11 zur Bestimmung der Festigkeit der Wechselwirkung eines adsorbierten Stoffes mit dem Substrat oder zur Überwachung der Verschiebung des adsorbierten Stoffes oder seiner Aggregate gegenüber dem Substrat.

15. Verwendung der Vorrichtung gemäß Anspruch 10 oder 11 unter Verwendung von Standardstoff zur Adsorption mit einer genau bestimmten Größe, der die Bestimmung der Strömung einer Flüssigkeit oder eines Gases durch die Schicht aus adsorbiertem Stoff ermöglicht; oder
Verwendung der Vorrichtung gemäß Anspruch 10 oder 11 unter Verwendung von Standardstoff zur Adsorption mit einer genau bestimmten Größe, der die Bestimmung des Grades der Agglomeration des Stoffes ermöglicht; oder
Verwendung der Vorrichtung gemäß Anspruch 10 oder 11 unter Verwendung von Standardstoff zur Adsorption mit einer genau bestimmten Größe, der die Unterscheidung zwischen einfacher und mehrschichtiger Adsorption des adsorbierten Stoffes ermöglicht; oder
unter Verwendung der Vorrichtung gemäß Anspruch 10 oder 11 unter Verwendung von Standardstoff zur Adsorption mit einer genau bestimmten Größe, der die Bestimmung des Grades der Penetration des adsorbierten Stoffes in die durchlässige Oberfläche des Substrats ermöglicht.


## Revendications

1. Procédé de détermination de l'épaisseur d'une couche d'une matière adsorbée sur un substrat présent dans un récipient ayant une entrée et une sortie,

- dans lequel le substrat forme un lit qui est perméable aux fluides ou aux gaz et qui interagit avec la matière, au moyen d'une mesure d'une différence de pression entre une entrée et une sortie du récipient lorsqu'un fluide ou un gaz s'écoule à travers ledit lit perméable ou au moyen d'une mesure de la pression au niveau de l'entrée du récipient lorsque la sortie du récipient est maintenue à pression constante, dans lequel l'épaisseur de la matière adsorbée sur le substrat est
- proportionnelle à l'épaisseur d'une couche adsorbée d'une matière de référence adsorbée sur un substrat, à tout type de logarithme du rapport de la différence de pression sur le substrat dépourvu de la couche de la matière adsorbée (substrat non chargé) et sur le substrat authentique avec la matière adsorbée, et
- inversement proportionnelle à tout type de logarithme du rapport de la différence de pression sur le substrat non chargé et sur un substrat authentique avec une matière de référence adsorbée sur ce substrat ;
dans lequel l'épaisseur de la matière adsorbée sur le substrat est calculée au moyen de l'équation suivante :

$$h_S = \frac{h_R}{\frac{\ln\left(\frac{\Delta P_Z}{\Delta P_{kR}}\right)}{\ln\left(\frac{\Delta P_Z}{\Delta P_{kS}}\right)}} = \frac{h_R * \ln\left(\frac{\Delta P_Z}{\Delta P_{kS}}\right)}{\ln\left(\frac{\Delta P_Z}{\Delta P_{kR}}\right)}$$

dans laquelle $h_S$ est l'épaisseur de la matière adsorbée sur le substrat, $h_R$ est l'épaisseur d'une couche adsorbée d'une matière de référence adsorbée sur un substrat, $\Delta P_Z$ est la différence de pression du substrat dépourvu de la couche de matière adsorbée, $\Delta P_{kS}$ est la différence de pression du substrat avec une matière échantillon adsorbée, et $\Delta P_{kR}$ est la différence de pression du substrat avec une matière de référence adsorbée.

2. Procédé selon la revendication 1, dans lequel l'épaisseur de la matière adsorbée sur un substrat est décrite par toute corrélation ou tout ensemble de données entre la différence de pression mesurée du substrat non chargé, d'un substrat authentique avec une matière adsorbée et d'un substrat authentique avec une matière de référence adsorbée et l'épaisseur d'une couche adsorbée ayant une tendance qui donne un indice de corrélation mathématique ($R^2$), calculé entre la corrélation ou l'ensemble de données susmentionné et les valeurs produites par la corrélation de la revendication 1, pour des valeurs de différence de pression égales, supérieur à 0,5.

3. Procédé selon la revendication 1, dans lequel la matière est une espèce choisie dans le groupe constitué d'un ion, d'un atome, d'une molécule, d'une nanoparticule, d'un virus, d'une cellule, d'une particule ou d'un agglomérat de l'espèce ou de leur combinaison.

4. Procédé selon la revendication 1, dans lequel l'écoulement à travers le lit perméable est un écoulement laminaire.

5. Procédé selon la revendication 1, dans lequel la différence de pression sur le substrat non chargé et sur le substrat authentique avec une matière adsorbée est provoquée par l'écoulement de liquide et le liquide a des propriétés physico-chimiques constantes affectant la différence de pression, ou dans lequel la différence de pression est comprise entre 0,001 bar et 10 000 bars, de manière plus particulièrement préférée entre 0,01 bar et 1 000 bars et de manière encore plus particulièrement préférée entre 0,1 bar et 100 bars.

6. Procédé selon la revendication 1, dans lequel la fraction de vide du lit perméable est constituée des pores entre les parties solides ayant une taille allant de 10 nm à 10 mm, de préférence de 100 nm à 1 mm.

7. Procédé selon la revendication 1, dans lequel la taille des pores entre les parties solides du substrat est choisie en fonction de l'épaisseur attendue d'une couche adsorbée pour correspondre à une différence de pression préférée selon la revendication 5.

8. Procédé selon la revendication 1, dans lequel la matière dont l'épaisseur d'une couche adsorbée doit être déterminée et la matière de référence interagissent avec le même substrat.

9. Procédé selon la revendication 1, dans lequel le substrat est un monolithe poreux ou une membrane, ou dans lequel le substrat est constitué de particules non autoporteuses ou dans lequel le substrat est de préférence non compressible ou a une faible compressibilité.

10. Appareil fonctionnant selon le procédé de la revendication 1, comprenant
soit au moins un dispositif créant un écoulement à travers ledit substrat tel qu'une pompe, un substrat présent dans un récipient et un dispositif pour mesurer la différence de pression entre une entrée et une sortie du substrat,
soit au moins un dispositif créant un écoulement à travers ledit substrat tel qu'une pompe, un substrat présent dans un récipient et un dispositif pour mesurer la pression à l'entrée du substrat ;
un filtre avant le substrat présent dans un récipient ; et
une unité d'interface, un ordinateur et un logiciel approprié pour l'acquisition de données, l'analyse de données et la régulation, le logiciel comprenant des instructions qui, lorsqu'elles sont exécutées par l'ordinateur, provoquent la réalisation par l'ordinateur du calcul d'épaisseur de la revendication 1.

11. Appareil selon la revendication 10 comprenant un substrat supplémentaire présent dans un récipient séparé et un dispositif pour mesurer la différence de pression entre l'entrée et la sortie, les deux substrats présents chacun dans un récipient séparé ayant la même structure mais un substrat est dépourvu de fonctionnalités provoquant des interactions avec la matière, ou comprenant un ensemble de substrats présents dans les récipients séparés, chaque récipient comprenant un dispositif pour mesurer la différence de pression entre l'entrée et la sortie, tous les substrats présents dans des récipients séparés ayant la même structure mais des fonctionnalités différentes, en particulier permettant la détermination simultanée de l'épaisseur de couche de plusieurs matières d'adsorption d'un échantillon complexe.

12. Utilisation de l'appareil selon la revendication 10 ou 11, dans laquelle un ou plusieurs fluides ou gaz ayant différentes viscosités sont pompés à travers un lit perméable ne contenant pas de matière d'adsorption sur un substrat, à différents débits, créant une différence de pression selon la revendication 5, pour évaluer la compressibilité du lit perméable, ou dans laquelle un ensemble de matières de référence de forme et de taille déterminées avec précision pour adsorption sur un substrat est utilisé pour étalonner ledit appareil, ou dans laquelle le débit à travers le lit perméable change graduellement pour obtenir plusieurs valeurs de différence de pression sur ledit lit perméable, afin d'atteindre une plus grande précision de mesure.

13. Utilisation de l'appareil selon la revendication 10 ou 11 pour la détermination de l'épaisseur d'une couche d'une matière adsorbée sur un substrat dans la gamme comprise entre 0,1 nanomètre et 100 micromètres ou pour déterminer un effet du changement des propriétés physiques du fluide ou du gaz s'écoulant à travers le lit perméable, formé d'un substrat avec la matière adsorbée, sur l'épaisseur d'une couche adsorbée.

14. Utilisation de l'appareil selon la revendication 10 ou 11 qui permet la détermination de l'orientation d'une matière adsorbée asymétrique sur le substrat, ou utilisation de l'appareil selon la revendication 10 ou 11 pour la détermination de la force d'interaction entre la matière d'adsorption et le substrat ou pour la surveillance de la désorption de la matière adsorbée, ou de ses agrégats, du substrat.

15. Utilisation de l'appareil selon la revendication 10 ou 11 avec une matière d'adsorption de référence ayant une taille déterminée avec précision qui permet la détermination de l'écoulement de fluide ou de gaz à travers la couche de matière adsorbée, ou utilisation de l'appareil selon la revendication 10 ou 11 avec une matière d'adsorption de référence ayant une taille déterminée avec précision qui permet la détermination du degré d'agglomération de ladite matière, ou utilisation de l'appareil selon la revendication 10 ou 11 avec une matière d'adsorption de référence ayant une taille déterminée avec précision qui permet de discriminer entre une adsorption mono et multicouche de ladite matière adsorbée, ou utilisation de l'appareil selon la revendication 10 ou 11 avec une matière d'adsorption de référence ayant une taille déterminée avec précision qui permet la détermination du degré de pénétration de ladite matière adsorbée dans la surface perméable du substrat.

flow direction

flow direction

flow direction

Figure 1

Figure 2

Figure 3

Figure 4

Figure 5

# EP 2 856 079 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **STEINKE M.E. ; KANDLIKAR S.G.** *International Journal of Thermal Sciences,* 2006, vol. 45, 1073-1083
- **JUDY J. ; MAYNES D. ; WEBB B.W.** *International Journal of Heat and Mass Transfer,* 2002, vol. 45, 3477-3489
- **FRANKOVIC V. ; PODGORNIK A. ; KRAJNC N.L. ; SMREKAR F. ; KRAJNC P. ; STRANCAR A.** *J. Chromatogr. A,* 2008, vol. 1207, 84-93
- **LENDERO KRAJNC N. ; SMREKAR F. ; STRANCAR A. ; PODGORNIK A.** *J. Chromatogr. A,* 2011, vol. 1218, 2413-2424
- **SMREKAR F. ; CIRINGER M. ; STRANCAR A. ; PODGORNIK A.** *J. Chromatogr. A,* 2011, vol. 1218, 2438-2444
- **TALLAREK U. ; LEINWEBER F.C. ; SEIDEL-MORGENSTERN A.** *Chem. Eng. Technol.,* 2002, vol. 25, 1177-1181
- **MERHAR M. ; PODGORNIK A. ; BARUT M. ; ZIGON M. ; STRANCAR A.** *J. Sep. Sci.,* 2003, vol. 26, 322-330
- Monolithic materials: preparation, properties, and applications. Elsevier, 2003, 51-76
- **BIRD B.B. ; STEWART W.E. ; LIGHTFOOT E.N.** Transport phenomena. John Wiley&Sons, 1960, 196-200